(19) Europäisches Patentamt
European Patent Office
Office européen des brevets

(11) **EP 4 742 197 A1**

(12) # EUROPEAN PATENT APPLICATION

(43) Date of publication:
**13.05.2026 Bulletin 2026/20**

(21) Application number: **25214682.4**

(22) Date of filing: **10.11.2025**

(51) International Patent Classification (IPC):
**G06V 30/10** *(2022.01)*

(52) Cooperative Patent Classification (CPC):
**G06V 30/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.11.2024 PT 2024119815**

(71) Applicant: **Hebdómada Unipessoal, Lda
1600-176 Lisboa (PT)**

(72) Inventor: **CABRITA PAIS HOMEM, LUÍS MANUEL
1600-176 Lisboa (PT)**

(74) Representative: **Moniz Pereira, Manuel
Gastão da Cunha Ferreira, Lda.
Avenida António Augusto Aguiar 108 4
1050-019 Lisboa (PT)**

(54) **OPTICAL CHARACTER RECOGNITION AND COMPUTER VISION METHOD**

(57) The present invention addresses the use of an OCR and computer vision technique/technology that enhances optimization of processing and memory resources related to every OCR stage subsequent to Image Acquisition, utilizing adaptive thresholding to incorporate images (text, images, and video) through preprocessed "reversed binarization" (bitmapping and pixel-wise).

Figure 2

EP 4 742 197 A1

## Description

## FIELD OF THE INVENTION

The present invention relates to the general field of OCR and computer vision technology and has several technical applications from a new use of the binarization mapping (under various OCR stages) of the bitmap code for any object (text/images and video).

## SUMMARY OF THE INVENTION

The present invention relates to a software-based system developed to make Optical Character Recognition (OCR) faster and more efficient in terms of processing and memory use. It introduces a new reversed binarization method, related to thinning or skeletonization, which enhances the way images and symbols are analyzed.

This method allows the system to process both the foreground (the characters or objects) and the background (the surrounding space) through precise pixel mapping. It can also use multiple layers to combine other advanced technologies, such as cryptography, cellular automata, and machine learning techniques based on language and semantics.

The system combines enhanced image pre-processing, machine-learning-based recognition, and context-aware post-processing to improve overall performance and accuracy. As a result, it enables more intelligent image analysis, better integration with AI and cryptographic methods, and improved performance in OCR applications involving text, images, and even video.

## BACKGROUND OF THE INVENTION

An important range of academic contributions is admissive of cross-referencing for the technology. An exemplative short list is hereby submitted:

- "Document Image Binarization: A Comprehensive Survey". Author: K. N. Otsu. Publication: IEEE Transactions on Pattern Analysis and Machine Intelligence (1979);
- "Handwritten Digit Recognition with a Back-Propagation Network". Author: Yann LeCun et al. Advances in Neural Information Processing Systems (1989);
- "Convolutional Networks for Images, Speech, and Time Series". Author: Yann LeCun, Yoshua Bengio. Publication: MIT Press (1995);
- "Bidirectional Long Short-Term Memory Networks for Machine Reading". Author: Alex Graves, Jürgen Schmidhuber. Publication: Advances in Neural Information Processing Systems (2005);
- "Tesseract: An Open-Source Optical Character Recognition Engine". Author: Ray Smith. Publication:

Google Research (2007);
- All of the previous and similar are fundamental in having presented either theoretical advancements or appurtenant surveys (artificial neural networks, including convolutional; different template and lines matching; types and uses of memory; binarization original methodology; computer vision and pattern recognition; more advanced pattern analysis under machine intelligence in deep learning text recognition, etc).

Several previous patent documents that relate to the field of OCR technology are listed herewith:

- DE Patent 507 041, filed by Gustav Tauschek and is directed to an early OCR machine (1929);
- US Patent 2,663,758, filed by David Hammond Shepard on 1951 and US Patent 2,933,246, filed by Jacob Rabinow address the general outlines of Character Recognition (CR) by optical means (from mechanical analog to electronic digital standpoints);
- US Patent 6,199,042, filed by Kurzweil on 2001 discloses a technology catalyser for sub-niches of different technical explorations & enablers (neural networks, recognizing techniques for handwritten characters, general-purpose improving engines and techniques, OCR accuracy improvement by the use of multiple classifiers, idem the latter for the most challenging documents, diversification of specialized applications, adaptive processing, using of noise-tolerant n-gram models, handling of multiple languages, machine learning techniques, etc.).

The first OCR technical solutions, forebearers of modern OCR technology, such as Gustav Tauschek's "Reading Machine" (1930s), were mechanical-analog electric conductivity ray controllers, wherein the apparatus and the provision of light positively trapped each other at the indicative "cells" for each character. These were opposite to the lens, after the carriers' placement, and whence from, on the other side of the lens a photo-electric cell was onwards illuminated from a source of light, and in front of which a wheel was moving (with stencil-recesses with numerals or other character-bearings, different from the blades of the wheel as control means to open or close).

Next in importance, D. H. Shepard 's first "Apparatus for Reading" (1950s) optical system, to the end of printed, or else punched openings particular characters sensing/scanning, also relied on light reflected through a lens system, retrieving the proper image of the character on the surface of a so-called rotating mask (with sectors at a time centrally disposed, alternatively a travelling belt), dully endowed with openings to a second lens system, all throughout focused onto a photoelectric cell or alike. Presumed was a sort of "hitting" on at least a portion of each character, relative to a selected arrangement (in radial angular direction) of openings of the mask.

This was exemplarily shown in relation to an illustrative set of the ordinary alphabet of capital letters but with much larger application). The reduced light for each placed sector and area would, therefore, produce in the light sensitive device an output pulse, to be added to a continuum of others for every other relative positions. As it is fairly understandable, the differentiable feature of this invention was the continuous combinable/permutable scanning, wherein a plurality of mask arrays continuously recorded "hits" for each different mask portion and correspondent different characters (light receiving electrodes in the photoelectrical cell connected to a high voltage source, electrons thus, in successive clockwise movement, impinging upon the first or most negative of the dynodes, voltage dropping afterwards in positive direction, with a just alignment between sectors of the mask and different coupled parts, such as the segments of the commutator and distributor device). Several technicalities are presumed in this interpreter system, but one essential feature is, surely, the exceptionally large combination/permutation range for every mask openings employed, following the continuum of pulses for different symbols ("painted" pictures by so-called "signal" dots, or else called "signal-no-signal" dots) and relay contacts permitted into the program. Overall, D. H. Shepard's "Apparatus" was a highly programmable special-purpose electronic computer aimed at pattern analysis, programs here understood as matching "sub-patterns" for the relay system, according to a large array of criteria (number of characters, distinctiveness, print quality, vertical misalignment, subpatterning, memory positions, added setups, etc.). The span around this invention and inventor (both its axis as well as outer lying features) goes across at least three decades ("Apparatus for Regulating Output of Photosensitive Scanners" (Filed 56); "The Interval Marking Apparatus" (Filed 56); "Apparatus for Checking Accuracy of Automatic Reading Characters" (Filed 56); "Differential Scanning Apparatus" (Filed 58); "Apparatus for Reading Intelligence Bearing Characters" (Filed 64); "Character Reading System Controlled by Preprinted Program Control Characters in Document Form" (Filed 71); "Multiple Scanner Character Reading System" (Filed 71); "Character Reading Techniques" (Filed 76) etc.

Onward, the next work of relevance, more or less coincidently, is Jacob Rabinow's "Reading Machine" (Filed 1955) and the related patents "Electro-Optical Scanning System for Reading Machines" (Filed 1957), "Reading System with Dictionary Look-Up" (Filed 1961), and "Reading Machine with Automatic Recognition of Characters Substituted for Print Errors" (Filed 1963). The very first was, nevertheless, the stemming "Optical Coincidence Devices" (Filed 1952). Rabinow first established the means for a flying spot scanner (at the epoch on punched cards or microfilms), designed to overcome the inherent difficulty of discerning between misalignments and mismatches, in other words whenever the information carrier and the identification mask (opaque mask with transparent code designations of the sought-out information) through the optical system, were misaligned. This flying spot scanner would primarily throw light adjacently to the information indicative areas in succession, against opaque contraventions and actual mismatching light reaching the cells (and beforehand upon the film or cards). Important to know, the method was accurately differential, meaning that the amount of light extra shone would always amount to this misalignment necessarily having to be scarcer than an actual mismatch.

The intricacies were enormous ranging from photosensitive cells size, to grey levels, lens distance or bearing materials, voltage output and amplifiers to the plate of the diode, but, briefly, and apart from the embodiment of the invention (except for the idea of the circuit operating in conjunction with the flying spot), the claims point out to information-sensing art by any optical scanning means, thereafter in between the light source and the record medium, the rate of which was back and forth parallel to the carrier and mask common axis, permitting the overcome of "one-indication" false mismatches by the flying spot, thus targeting only actual positive mismatches. From the diodes, was the condenser charged with several large voltage pulses and, then, by operative synchronization with the closed relay switch, the flying spot scanner was right after deenergized over the said lighttransmitting area, in the overall behaving as a general multiple sweep over the information carrier (however showing various circuits, the virtue of the use of a cathode-ray is obvious in comparison with any mechanical drive, a pertinent note on the epoch's shift from electromechanical to optical-electronic devices with OCR in sight).

The system also allowed the application of data to the negative image, from the use of the said parts - a half-shivered mirror and a rotating opaque disk with an helix, letters transparent therein - with the final result of having letters or numerals printed that were shown on the front of the flying spot, after, in order, the amplifiers and comparators circuit photoelectric carrying or feedback, the resemblance being ostensive with Zworykin's patented television electron beam tube. Rabinow's next filed patent was the "Reading Machine" (Filed 1955), envisaging directly OCR technology (dark print on light paper), from the onset meaning internally stored characters as optical elements, inasmuch as electrical bytes, through the instrumental use of an optimal "maximum match" with minimal changes in the set-up when needed to attest for different fonts, all in all under high speed, also recurring to a flying spot scanner consisting of a cathode ray tube and a lens, producing a preferably crisscross alternating fields raster (concerning position, speed, and jitter). This would, thus, act as reflected on the illuminated area of the paper, projected by a multisided mirror, onto a "memory" film (made of masks where the character/numeral is photographically transparent, and the rest opaque). The precision attained was in the order of thousands of an inch and there was, intrinsically, a multiplicative element, insofar the multielement surface mirror projected simultaneously different imagens of the same character/numeral onto each different character/numeral of each mask. At the time, because of the embodiment mechanical said parts, the character/numeral could bear "grey" elements, therefore susceptible of reflecting a certain amount of light, and onwards call forth spikes in the photoelectric circuit, banded together with an amplifier (diodes with associated capacitors able to detect peaks and connected with the cathode-follower). The special-purpose and even general-purpose computer-like operationalization was presumed ex hypothesis the use of the different board or plate circuits bracketed to a relay, the output of which would be of use to light indicators, a typewriter, or any other function, in any way compromising the initial set-up of large amplitude spikes on the output of the photocells, and correspondent discharging output negative voltage. Because what happens most are mismatches instead of recognized characters/numerals, the usually positive voltage of the cathode tube was often lowered, and inversely positivized when a match was found, under a sort of mechanical "shadow play" wherefrom each optimal mask of a character/numeral found corresponded to the highest charged of several various charged capacitors coupled with the grid of the paralleled tied together non-conductive high-potential energy vacuum tubes on the plate circuit. This was also performed under a sort of "game of chairs", where the last sit (herein the character/numeral with the highest peak voltage remaining in situ, whereas all the other characters/numerals would have been discharged and displaced, thus "out of the game"). The embodiment was non-descriptive and modular-open in relation to various aspects of the reading station, including zig-zag horizontal and vertical solutions in the open, or intensities of light fell on, either by automatic or human control (parallel and sequential). Signal processing image-examining by algebraically controlled photosensitivity on a reading machine endowed with memory by active comparison, as a method, found also echo in Rabinow's "Electro-optical scanning system for Reading machines" (Filed 1957) with the focus on the scanning system (a topic somehow divergent to OCR's core state-of-art, but also receptive under some aspects). The scanning system was able to discern and examine only the rectangular area of the character from an arrangement of so called "light pipes" (rigid or flexible transparent rods of plastic or glass, of very flexible use in light with internal reflection, a scanning disk possibly of the Nipkow type being opposite in the embodiment to the mask with holes or radial slots). The main idea was to have the character projected from the background to lens onto a back of opaqueness percolated by these "light pipes" disposing of one end on one side, the other on the opposite, consequentially halving light emitting and light receiving tracts.

The use of the "light pipes" was important as it permitted the transformation of any printed character, or image pattern, into a light-reflected voltage-equivalent straight line, arc or similar. This was important not only because it enabled the exaggeration of otherwise very similar characters, such as "O" and "Q", but, more so and crucially, because it pointed out, at the limit, to a machine-independent readability to improve efficacy of the invention and/or process (apart from presumed fixed-type lens image inversion). Important to notice was also the use of "guard" elements to attest for the complete condition of absence of dark areas outside each character. Besides, the transformative nature of patterning of characters at high-speed scanning with potential highlighted areas (through a horizontal/vertical arcuate line), was a paramount feature of the invention, alongside the testable application of all-electronic means for all of the said parts.

"High-Speed Optical Identification of Printed Matter" and "Reading Machine Output Controller Responsive to Reject Signals" (both Filed 1960) endorse us with, respectively, a system for the recognition and reading of characters printed in any font, at very high speeds, and a system for producing an output identifying the character that the machine was incapable to identify.

The "Printed Matter" could be, in theory, any devisable character beyond alpha-numeric coding, yet taken in the whole to be "turn-around" documents (checks, money orders, credit slips, receipts, letter mails, etc.). In the context of characters on optical masks in search of the "best match", any registration adjustment implied a mechanical or optical slowdown reappreciation, and nevertheless liable to break up of characters and segmentation, more mistakes being generally made from read parts compared to the whole of characters with accompanying correlation matrices of electrical resistors.

Therefore, a new type of care of vertical registration by electronic shifting was devised, recognizing characters as a whole, by the use of resistor correlation matrices, only possible, though, by a subdivision of the area in two shifting directions into a twodimensional array, each with a memory cell assigned.

The cells overlapped each other, they all read the same vertical line synchronously, and thus their height was increased upon, wherefrom the very same vertical position of the characters, contained within the top-bottom extremities, permitted the accelerated reading in binary output. Under the "signal section", the amplifiers of the photocells were connected, in turn, to double-input AND-gates in tandem with the flip-flops, and thereon to OR-gates now in the "control section", allowing for the final "recognition section" of the character after the time generator pulse at constant speed, according to epochal most perfected mechanical-electrical embodiment and said parts. Each short pulse timely cycle was a place in the matrix from arbitrarily chosen vertical columns, a quantized binary state and a patterning image. More in detail, and for the case under appraisal, a character would be shown nominally as 14 units high (out of 22), and 5 units wide (on the 5 X 7 grid for each character), with the result of various inconvenient vertical heights, which were, then, corrected in the storage register by shifting downwards all of the columns of the register flip-flop.

The storage of the character was, thus, punctuated by resistor correlation matrices, so to test the voltage relayed by the set of resistors with the perfected ideal characters in the binary memory (each flip-flop with an "assertion" and "negation", irrespectively of the fact that the voltage ranged from 0 volts to perfect match "blacks", and +6 for no matching found whatsoever, so determinant it was to the best selector match circuit in the final "recognition" section). The general output was, hence, statistically binary (in the brink of ahead OCR softwarization), in the sense that the machine did not produce absolute judgment, but instead comparative with the best match (and nearest to 0), allowing complacently for a number of spread-out points to be wrong (slightly deviated from their ideal graphic memory) in the character image, all for the sake of right-choosing the right character, potentially setting any set of signals for any set of characters (welcoming ahead various shades of "grey", or levels of "greyness", and not just "black" and "white"). These were, brief, the main features of the invention, and for that reason we are discarding the description of the equipment, details of the matching circuit, scanning mechanics and schematic diagrams of action, odd and even resistor choice against single resistor, alternative techniques, method of positioning characters, their beginning and end, etc. even if sporadically and sometimes - centrally under "machine philosophy" (Rabinow's own expression) - their intricacies being superbly relevant. Rabinow's main claims in "Reading Machine Output Controller Responsive to Reject Signals" (Filed 1960) go further in the statistical method of errors and reject signaling capitalization and was too a system identifying the character(s) that the machine was incapable of identifying.

Whenever a malfunction (a "character" or maybe even a "group of characters" reject signal) showed, originating at the comparator transistor (re-shift from the amplifier to different lines, reset into the flip-flop, and stalled the sheet handling mechanism), the human agent could now read the sheet and ascertain the non-read character (with audible or visual signs in service). Concurrently, the devise for a "Reading System with Dictionary Look-up" (Filed 1961) still relating to reading machine systems, at a time of tentative effort to identify words rather than characters alone (while an open question either by optical or magnetic practices), the inlaid idea was that of a dictionary look-up to ascertain the identity of a word, if the machine was not capable of identifying one or more of its characters. Yet, the overall recognition of the word was not by the general outline of strokes in a word, but instead by individual characters (letter-for-letter, bit-for-bit), where the "errors" might have shown up, with novel aspects in what regards the dictionary look-up technique under the buffer memory, insofar it worked with "trials" by statistic method affine with Claude Shannon's mathematical theories of communication (the order of the most frequent characters in a language, when it is definitely one choice out of two or the smallest range, or the use of the "ignore" symbol, eroding ambiguity in multiple fronts, even if misspelled, erroneously printed, or excessively blurred out).

Some of these aspects are very important, as they inaugurated a sort of oracle and machine proof-reading intelligence in OCR, something that was also reflected under "Reading Machine with Automatic Recognition of Character Substituted for Print Errors" (Filed 1963), which relied on positive obfuscation through the lines of print, meaning that each erroneously printed character was neglected and properly replaced, without even the output device (buffer, computer, printer, punch, etc.) being aware of the substitution made by the reading machine. Not only the human typist could instruct overprints, as any obfuscated character (thus, made "black" or obscured) was neglected (not "rejected") all of this without the machine ever stopping. The principle was appliable to all sorts of reading machines (stroke analysis, matrix, area comparison, feature selection, curve tracing, and others), even if fixated the description in connection with retina-like machines (printed lines swept across photocells extracting each character after horizontal and parallel lines in print movement, and wherefrom true characters were chosen against overprinted or otherwise disfigured characters, without these being accounted as "rejected"). This inserting-print ability concomitantly with the proper reading and even editing/or formatting powers showcases the fundamental tenets of the referred patent, without any need for the detailed description to follow more in detail, as the embodiments pertain to deprecated technological state-of-the-art, inasmuch as both software and sensing abilities have since then substituted mechanical analogue scanning.

## ADVANTAGES OF THE INVENTION

The present invention results in several advantages with regard to the disclosed prior art. Namely, the present invention allows for the emergent use of "différance" new characters/objects derived from intervals of original optically recognized characters/objects under every "document item" (word, line, sentence, paragraph, region, and other text-based structures) or any chosen segmentation. This reversed binarization pre-processing, with further effects primarily on thinning and/or skeletonization techniques, permits inclusion and maximization of state-of-the-art technologies with OCR, including advanced AI, cryptographic methods, cellular automata, and neural network models (including large language models).

## BRIEF DESCRIPTION OF THE DRAWINGS

The drawings included in the present application provide a visual basis for better understanding of the present invention.

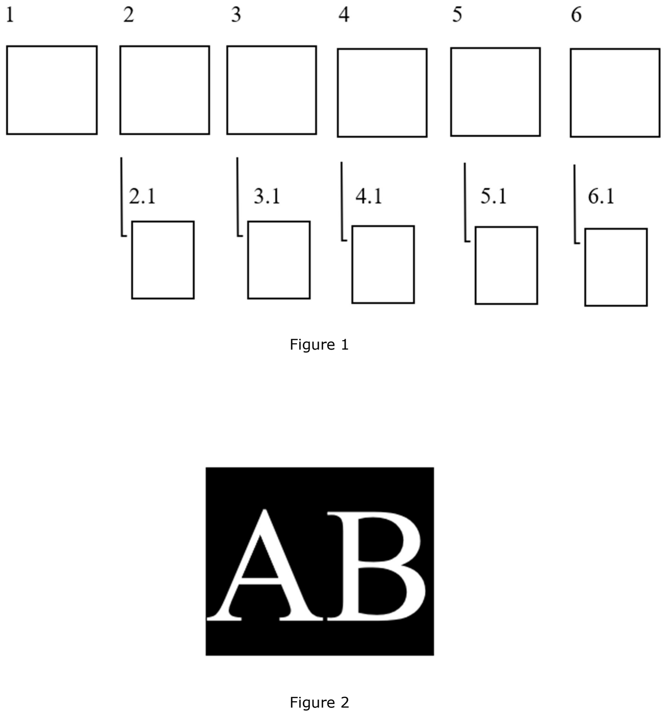

**Figure 1** illustrates a block diagram of the OCR industry's recognized preferred software stages embodiment, comprising:

- Stage 1: Image Acquisition - Images are received through capturing text image/video via scanning, photography, or any form of input digitalization;
- Stage 2: Pre-Processing - Image binarization is applied, improving image quality through noise reduction and skew correction;
- Stage 3: Image Segmentation - Breaking down of segments or regions is applied, including lines, words, and general characters;
- Stage 4: Character Extraction - Identifying features of characters are recognized, including general patterns, shapes, and strokes;
- Stage 5: Image Classification Process - Recognition by character or word is performed through algorithmic and/or machine learning identification;
- Stage 6: Post-Processing - Error correction, final validation of recognized text and reconstruction of text structures are applied, resulting in final converted images into machine-readable text, thereafter, typically conforming to retina-based reading.

**Figure 2** illustrates reversed binarization bitmap/pixelization, demonstrating the "différance" interval between typed characters "A" and "B".

In standard representation, Foreground typed characters or objects of interest are represented as "Black" (typically assigned value 0), while Background "White" area is represented with value 1. Through reversed binarization, typed characters "A" and "B" are now rendered as Foreground "White," while Background becomes "Black."

This reassessment technique does not merely display conventional pre-existing "A" and "B" characters in reversed form, but instead identifies the "différance" interval cleaved between them as a new graphical character positioned between "A" and "B." This new character is inserted under any chosen "document items" (including words, lines, sentences, paragraphs, regions, and other text-based structures, any text-in-line segmentation, preferably each line), enabling substantially larger OCR image processing system implementations.

The reversed binarized image could alternatively represent the reverse of the inverse of the image shown, wherein typed characters "A" and "B" both exhibit Foreground "White" reversed to "Black," with any assigned binary value to pixels (0 or 1) based on whichever specified threshold is employed.

## DETAILED DESCRIPTION OF THE INVENTION

A significant limitation in current optical character recognition (OCR) technology stems from the prevailing assumption that computer-based OCR systems must replicate the processes by which the human eye and brain interpret text. In reality, the most effective OCR system need not adhere to the same operational principles as human vision.

A machine-centered approach, even where such approach requires increased data or memory allocation at certain processing stages, can nevertheless achieve substantially greater overall efficiency by eliminating unnecessary processing operations and optimizing system performance.

Furthermore, OCR systems exhibit reduced effectiveness when they fail to exploit integration with complementary technologies including, but not limited to, cryptography, cellular automata, and machine learning techniques based on linguistic and semantic data. Integration of these methodologies can significantly enhance both the power and efficiency of OCR systems.

Integration through the present invention

The present invention enables combination of methods and technologies including cryptography, cellular automata, and machine learning based on linguistic and semantic data. The technology arises from currently employed standard binarization techniques. The manner in which the invention may be implemented and operated is explained through exemplary main techniques and contemporary survey of binarization and matching algorithms.

OCR processing (and computer vision) comprises six sequential stages:

- Image acquisition,
- Pre-processing,
- Image segmentation,
- Character (or objects) extraction,
- Image classification process,
- Post-processing.

Binarization within pre-processing

Among these six stages, binarization is incorporated within the "Pre-Processing" stage (Stage 2). Binarization performs conversion of grayscale or color information into binary representation, wherein each pixel is classified as either Background or Foreground text by establishing a threshold value, thereby extracting characters of any type.

Pixels exhibiting luminance values lighter than the threshold are designated "White" (Background), while pixels that are darker than or equal to the threshold become "Black" (Foreground). The threshold itself may be global (such as Otsu's method) or alternatively locally adaptive (employing techniques such as Niblack, Sauvola, or Wolf's methods).

## Advanced binarization approaches

While sophisticated binarization approaches exist to resolve complex OCR tasks in challenging datasets, the need for them is less frequent with typed characters than with handwritten text.

State-of-the-art advanced binarization techniques can be categorized under four main spectra:

- Handling of noisy background,
- Edge detection,
- Machine and deep learning,
- Efficiency and parallel high-performance.

These categories represent the primary technological domains within which contemporary binarization methods operate and from which the present invention derives its foundational principles.

The present invention delivers improvements across multiple operational aspects of optical character recognition (OCR) systems. While structurally associated with edge detection techniques, the method of the present invention fundamentally exploits the smoothing of noisy backgrounds to accomplish a primitive process referred to herein as "reversed binarization" - a process wherein conventional white and black conversion is inverted (black-to-white and white-to-black) on all "text-in-lines".

## Reversed binarization process

The method operates on "text-in-lines", which term should be interpreted as encompassing Kurzweil's so-called "document items", including without limitation: words, lines, sentences, paragraphs, regions, and other text-based structures, preferably comprising any text-in-line segmentation, most preferably each line.

The reversed binarization of text-in-lines produces a large differential text-in-line sentence comprising what were previously white intervals of characters, now rendered black (yet representing the same intervals of characters). In effect, the previous white void spaces existing between black characters and words per text-in-line (every text-based structure per line) undergo transformation through reversed binarization, resulting in what appears computationally as one black (foreground) character, or alternatively, under intelligent OCR, a whole new sentence having new "différance" intervals between old characters: the previous black characters, now rendered white.

It should be noted that numerals are included herein as "characters" denoting numbers, as are all other grammatological symbols. Indeed, the method provides an emancipation of the character in abstract to any interval object.

The method represents a refined computational application of the "différance" concept from philosophy of language and metaphysics (Derrida). The original text-in-line black foreground horizontal strips at the line-level structure - which may utilize grey levels of intensity information, connected component analysis as groups of black pixels connected at their respective heights, clustering baselines, or other techniques to locate text lines - are subjected to reversed binarization to white under each sentence. The resulting single sentence of reversed binarized bit-space per text-in-line emerges as computationally foreground black, representing the binarized inversion of the text-in-line document item sentence or, more broadly, any of the aforementioned items (word, line, sentence, paragraph, region, and other text-based structures, or text-in-line segmentations), functioning as a linear reversion simple binarization function. It is crucial to clarify that the machine-centric approach operates directly on the inter-character white spaces, requiring no conversion to black whatsoever. This demonstrates that so-called reverse binarization in the technology of the present invention is precisely the reversed *use* of the binarization. Yet it is effectively - though not necessarily - recommended that the former white intervals manifest as new black characters for two reasons.

Firstly, the linear application of the reverse binarization function is very simple, and this emergence naturally suits oracle functions and discrete human analysis. Secondly, for advanced implementations in AI, cellular automata, and neural networks, a distinct emergence - best served by the color black - is advantageous for these symbolic objects under both human and machine-centered analysis.

## Treatment of interval characters and objects

The method treats the void interval (the blank "différance" between original characters) as new characters or objects, each positioned between any two original characters or objects. This substantially increases the computational size for alphabet recognition, particularly for multilingual applications, ideographic writing systems, and graphical symbolic systems.

## Mathematical analysis - English alphabet example

To demonstrate the method's scope, consider the English alphabet comprising 26 phonetic letters. The exercise calculates the number of possible ordered pairs of any two letters using the permutations formula:

$$P(n,r) = \frac{n!}{(n-r)!}$$

where n = 26 (total number of alphabet letters) and r = 2 (number of letters selected):

$$P(26,2) = \frac{26!}{(26-2)!} = \frac{26 \times 25}{1} = 650$$

For calculating permutations of the configured computationally foreground placements of different white reversed binarized interval "characters" - former white intervals between blacks now rendered black (white representing indifferently what was black previously, consistent with reversed binarization) - the calculation must account for graphic rather than -phonetic representation. Although binary, the method processes graphic information requiring consideration of 52 uppercase and lowercase letters, thereby yielding 26 permutation placements or different white reversed binarized characters (diacritic marks and punctuation aside).

Since each interval placement between any two original characters includes recognition of both characters, the result produces 2.652 possible bit-level new graphic permutations (reversed original OCR black characters) of any two reversed 26 interval "différance" characters:

$$P(52,2) = \frac{52!}{(52-2)!} = 52 \times 51 = 2.652$$

Compression efficiency

The method effectively compresses the artificial-based optical recognition of every two graphic design characters into one (including uppercase and lowercase). Moreover, with high probability and for each reading, the method dispenses at least half of the reading of both the previous and the next characters/symbols on the text-in-line.

State-of-the-art thresholding in binarization typically cuts the percentage by the foreground cutline and meets maximum optimization there, without streamlining the remaining percentage for other tasks, including main OCR. The method of the present invention addresses this limitation while safeguarding the requirement that in ideographic alphabets, special marks such as dots, slashes, and curved strokes must necessarily be included as objects representing original reversed black characters, thereby never counting as diacritic marks.

Application to pre-processing stage

For the case of the English alphabet, the array of 2.652 graphic permutations of any two reversed binarization original black characters is achieved from their interval "différance" graphic original characters. This proves especially advantageous when put to use with strong thinning (and/or skeletonization) methods in the pre-processing stage of OCR, liberating the process from aggravated weight of inner-cascading tasks per OCR stage, particularly under scenarios requiring indispensable AI, machine learning, deep learning techniques, and neural networks.

The method provides a superior repository for processing and memory space for advanced AI, cryptographic methods, cellular automata, and neural networks models, including large language models (LLMs).

Heterogeneous application domains

Without introducing excessive technical complexity, the heterogeneous nature of potential applications may be demonstrated through several exemplary implementations.

Artificial Intelligence integration

The liaison of AI with algorithmizing permits use of reversed binarization of the present invention to enlarge the scope of artificial intelligence in relation to text analysis. Examples include progression from natural language processing to artificial-based text categorizing toward large neural machine translation and fluency across different graphical symbolic alphabets, including ideographic alphabets.

Because the OCR technique of the present invention pertains to every graphic and symbolic n-dimensional objects under whichever transformations, their interval "différance" now being the new characters/objects, the method belongs to any mapping virtualized objects or groups of objects, including real and/or abstract symbolic constructions whichever signs or "alphabets" might be put to use under them.

The technique might be used, therefore, to analyze aerial or Lidar surveying, inasmuch as static code analysis under code reviewing. Also, on the reverse side, because neural networks and LLMs mimic the realistic physicality of neural activity in brains, where the three-part structure of a synapse - presynaptic neuron, the microscopic cleft or void (herein taken as parallel void space), and the postsynaptic neuron - the method may extend to neural network direct text/image/video analysis, say in Computer-Brain Interfaces (CBIs), enabling reading of dendrite-synaptic "thinning" characters/objects (foreground and background economizing) with line-featuring elements, simultaneously employing pointers in programming AI learning techniques within software implementations of the original "flying spot scanner" (Jacob Rabinow) and "hitting" techniques (D.H. Shepard).

## Machine learning and deep learning techniques

The method proves particularly valuable for machine and deep learning techniques, most notably in relation to cellular automata principles.

The repository of bit-level/pixel-wise "différance" new reversed characters in several discretization lattices/grids with neighboring black (foreground) cell levels, empowered by AI with programmed transition rules (Moore, von Neumann) and time steps (with assignable timestamp shifts for multiple tasks delivered by document items), can achieve complex behavior susceptible to application in several informatic tasks related to text analysis in higher-dimensional forms, or any other application, possibly achieving Turingcomplete reverse engineering for archaeological or forensic text analysis.

## Cryptographic implementations

Regarding cryptographic applications, the method can support use of diagonalization, particularly in relation to cellular automata and "artificial life" coding/-programming generation, enabling concealment of messages in plain text (including public key messages under asymmetric cryptography, provided there exists another shared-syntactic or semantic according to information in the text-cipher/public key message, potentially implemented recursively), or simply enabling sharing of hidden-in-sight public keys (rendered less public and ciphered, thus more private, by obfuscating their bridging or sharing) under asymmetric cryptography. Diagonalization is, originally, a proof technique, as a logical mechanism for demonstrating that something (a number, a function, a problem) cannot exist within a given system by constructing a counterexample that "diagonally" differs from every element in a hypothetical list, but we are, hereby, adhering to its meaning as an effect, i.e., the act of presenting a new, functionally equivalent formulation of a concept (like a key or a proof, but also the simplest use of inversed binarization) that is not recognizable as equivalent to the original, thereby in appearance at least breaking the link between the two.

Additional cryptographic applications include:

- Blockchain addresses to facilitate transactions requiring obfuscated communication;
- Lattice-based cryptography;
- Hash-distribution digital signature schemes;
- Zero-knowledge proofs as pixelized privacy-preserving techniques;
- Homomorphic encryption wherein ciphertext remains non-decrypted and secured as plaintext (applicable to any two or more equal number(s)/word(s) voting or cryptographic recovery systems for re-voting in aleatory/stochastic, ever-changing chaotic processes demanding real-time high-level decision-making with sharing of texts/images and video messages);

- Arbitrary segmentation of bits/pixels for computation including elliptic curves, threshold and multi-signature schemes for use by different collaborators of a document, book, or other text/image/video-based artifact;
- Equal pixel-photographic scanning biometric signatures;
- Countermeasures to detect frauds or breaches on keys, including detection of deepfake text, images, and videos;
- Communication protocols between printers and/or scanning devices with Internet of Things (IoT) implementations.

## Edge detection and binarization integration

Regarding "edge detection" within the "pre-processing" OCR stage (Stage 2), and independently of the aforementioned "différance" reversed binarization, the present invention modifies the conventional approach wherein "edge detection" functions as a sub-procedure of segmentation and boundary definition for individual characters from original binarization (whether global, local, or combined) threshold operations.

In the present method, binarization is performed underpinned on "edge detection" predominantly for machine-reading and machine-intelligence techniques, including machine learning, deep learning, and neural networks. This approach approximates the so-called "thinning" method, comprising a single-pixel line morphological operation that iteratively removes pixels from the outer edges or boundaries of any character object while preserving its connectivity and general shape, though not necessarily its size. Where size preservation is required, the so-called "skeletonization" method may be more appropriate.

## Machine-centered recognition approach

Under this approach, binarization (whether global, local, or combined) is not performed to recognize numerals, characters, or symbols per se in their entirety. The method does not require plenum retina-like numerals/characters in the foreground to be recognized as densely "Black" at every pixel for their standard replenishment of dark pixelization under predominant human-centered character recognition. Instead, the method recognizes the same numerals, characters, or symbol objects with full efficiency through their lines, limits, and edges only, understood as minimally connected strokes and points of composition.

This artificial-centered approach proves more economical in resources for typical AI, machine learning, deep learning techniques, and neural network independent tasks. This configuration elevates the thinning technique (sometimes disregarded to the point of nonexistence under the "pre-processing" stage) to primary functionality and algorithmizing technique in dialogue with AI, machine learning, deep learning techniques, and neural networks.

The underlying machine philosophy is that AI need not await human-centered retina-like OCR but should instead be trained to operate independently and synchronize subsequently, particularly given the demanding processing power and memory requirements of expanding AI systems. Recognition of numerals, characters, or symbols proves substantially more efficient under artificial-centered OCR, even when translated subsequently under table correspondence to retina-based OCR (and thus to human readability), than under the presumption that OCR technology must entirely replicate retina-reading processes, thereby missing the point of OCR efficiency and optimal computer resource allocation (memory and processing) for fully-independent AI, machine learning, deep learning techniques, and neural network tasks.

Pixel distribution analysis

State-of-the-art binarization typically exhibits the following pixel ratios under regular estimation for Foreground "Black" and Background "White" under typically common parametrized text images (considering font size, line spacing, text density on the page, ranging from standard documents with 12-point English font and regular spacing to graphics-heavy documents):

- Standard documents: approximately 85% to 95% Background "White" and 5% to 15% Foreground "Black";
- Graphics-heavy documents: approximately 60% to 80% Background "White" and 20% to 40% Foreground "Black".

These distributions demonstrate potential for substantial reduction in Foreground percentage with correlated Background percentage adjustment.

Regarding raw 1-bit-per-pixel standard binarized images, while compression methods for "White" Background bit-elements (such as lossless RLE and CCITT Group 4) perform adequately due to easier encoding of long sequences and text-in-line opposite "Black" horizontal strips, Foreground "Black" pixel bit-elements present compression challenges. Available methods such as JBIG2 for contiguous elements prove difficult to implement practically due to intrinsic scattering and, more consequentially, swerving randomization and unpredictability.

Double binarization implementation

With the "différance" (computationally "Foreground") "Black" technique (which would be "White" if originally "Black" when reversed, with equivalent effect for processing and memory tasks executed by CPUs/GPUs), combined with text-in-line, the present invention articulated with various existing thinning and/or skeletonization techniques, can perform binarization to achieve maximum double binarization (1× binarization + 1× self-reversed binarization).

This comprises "White" versus "Black" distinction, and subsequently "Black" versus "Inward Black" distinction (applicable to typed, handwritten, or other art forms indifferently). Through this effect, only the slimmest lines and curves in contiguity of cursive points or similar pixels (whether geometrically closed or open in their contiguity of "Black" Foreground pixelization bit-elements) are set against "White" Background, forwardly discarding replenishment to the maximum extent possible (to the limit of minimum possible "Black" raw 1-bit(s)-pixel(s) elements) through thinning/skeletonization-even with intrinsic contiguity of lines spaced apart (whether typed, handwritten, or other art), and sometimes including outlying sole one-dot marks, such as, at the limit, the punctuation period itself.

Inter-Omnia-Glypha characteristic

Attention should be drawn to this Inter-Omnia-Glypha trait of the present invention. Remembering that glyphs constitute the visual representation of characters (including typeface families, specific fonts conveying weight, width, and typographic style imprint, or general style in terms of handwriting or other art for any mediated alphabet, symbol, or extracted drawing composition), the method provides all-exclusive thresholding in binarization technique of both the "White" Background outward from the corpus of text, and the now-reversed "Black" Foreground inward within the corpus of text.

The "Grayscale" divisive method of computation for the binarization object for any binarization algorithm should, with the method of the present invention, divide "Black" Foreground from "White" Background, and additionally process the cursive elements in greatest contiguity (closed and open) as receded lines of identified "Black" against, in maximally adversarial manner, the "Black" replenishment of lines, curves, and general cursive points (closed or opened, wherein the algorithm exhibits less action and yields to the proper figure) at both inward and outward slimmest frontiers of lines, curves, and dots (similar to thinning/skeletonization).

This approach can be adapted where 1-bit/1-pixel raw thinning or basic skeletonization of new "différance" characters/objects may prove undesirable. For instance, if cellular automata cryptography on OCR grid structure of cells, discrete states, and rules composition demands higher dimensions of finite discrete states and overall complex deterministic rules depth, 1-bit/1-pixel representation may prove insufficient.

Impact on OCR and computer vision processing paradigm

Overall, this approach should drastically alter the OCR and computer vision pre-processing stage and its results. State-of-the-art OCR technology aligns artificial program-run OCR technology with OCR retina-based human-centered character recognition, whereas the present invention proposes focus solely on bare machine-artificial OCR technology for immediate, most efficient, resource-saving recognition of characters, most notably for AI advanced tasks.

State-of-the-art typical OCR output of characters corresponds to correct cleaner versions (maintaining recognizable layout except for information noise, with consistent height, width, stroke density, corpus replenishment, style elements, glyph composition as each combination of shape, scale and font, etc.), though majorant OCR applicability is predominantly driven toward reciprocity and convergence of artificial-centered OCR and human-centered retina-based OCR.

Even so, the current paradigm operates counter to machine intelligence even when the goal constitutes sole machine intelligence (AI, machine learning, deep learning, and neural networks), maintaining an overall scanning operative mode from Stage 1 (image acquisition) through Stage 3 (image segmentation) to Stage 6 (post-processing).

More specifically, under Stage 2 (pre-processing), following operations such as contrast enhancement, noise removal, skew and orientation correction, thinning/skeletonization techniques do not consistently assume importance despite introduction of AI, neural networks, machine learning, and deep learning. The inverse should prevail: the existence of AI, neural networks, machine learning, and deep learning techniques constitutes the primary reason for elevating the guiding importance of the thinning technique.

More importantly, the text-in-line (différance) (possibly computed while "White" still) reversed binarization (Foreground) "Black" of previous "White" intervals of text-in-line "document items" per line provides an excellent framework for general AI, neural networks, machine learning, and deep learning techniques, as well as general diagonalization and cryptography, cellular automata (some in combination), and truly Inter-Omnia-Glypha OCR technology.

## System-Wide OCR stage modifications

The technology of the present invention will alter proper inner-stages and techniques hierarchy, scope, and range of overall pertinence of applicability and use for every other OCR stage subsequent to or in tandem with Stage 2 (pre-processing).

For example, under Stage 3 (image segmentation), all aforementioned considerations have substantial consequences for region segmentation and text/non-text classification, implying amendment of classical and deep learning extraction features and image classification before or in tandem with Stage 6 (post-processing), the final OCR stage.

As a new method and general orientation technique for OCR technology, the thresholding methods and algorithms (whether global, local, combined, or experimental), including advanced binarization for complex OCR tasks under the four main spectra identified - (1) handling of noisy background; (2) edge detection; (3) machine and deep learning; and (4) efficiency and parallel high-performance - with "edge detection" particularly emphasized, will be revised for efficiency improvement and ultimately adapted or altered positively for AI-specific tasks primarily.

## Technical implementation summary

The technology/technique of the present invention has been illustrated in abbreviated manner with reference to the proper reversed (différance) binarization technique, constituting its most directly applicable primitive claim. State-of-the-art binarization itself, included in Stage 2 (pre-processing) of OCR technology, has been summarized to attest with precision to the technique of the present invention, demonstrating that it is not directed at an abstract idea, and to attest in exact terms the method, process, or programming code orientation or guidelines, comprising the technical means for implementation of the software itself, definitively establishing the technological aspect enabling any computer to carry out OCR's essential function in its differentiable most efficient manner.

## Relationship with existing binarization methods

The method presumes effective and extensive state-of-the-art original binarization methods against badly noise-degraded documents (including defective print, soiled paper, and additional defects/challenges in non-typed handwritten documents - including particularly difficult characters such as non-simplified ideographic/alphasyllabic alphabets, e.g., ancient Tibetan - general faint or blurred characters, bleed-through, scattered ink stains, and non-uniform illumination, etc.) independent of the binarization method employed, the evaluation techniques or gradient choices, or any combined approach.

The method of the present invention constitutes the reversed binarization method of the latter in any event. Classical binarization may be performed very favorably (for instance, with optimal edge-preserving filters) dispensing with the present invention's feature of $2\times$ inward reversed binarization of "Black" versus "Black" per corpus (closed or opened) of the character, word, or any other intelligently recognized "document item", whereby thinning/skeletonization proves already accurate, faster, and more efficient. In such cases, the present invention's reversed binarization follows anyway, without discarding the opportunity for performance metrics analysis in feedback, thus possibly applying software retroactive penalties or local-adaptive corrections if OCR performs poorly (independent of images and time-series).

The present invention will consistently reverse the anterior original binarization procedurally, and could give rise to revaluation and different threshold selection from greylevel histograms/color and different parametrizations if subjected to performance metrics to that end (predominantly multilayer back-propagation highly-complex non-linear pattern-recognition neural networks under permanent 1-D, 2-D, 3-D, or higher-D input training, provided distortion invariances are maintained normalized).

Alternative applications

One of the goals of the present invention is the simple use of reversed binarization of any particular text, indifferent to existence of erroneous simplification of blocks, quantization, or heights per line, broken characters in background from abusive use of purely local algorithms, etc., provided only its binarization is targeted. For example, cryptographic use of special "différance" characters not recognizably standard in median patterning, under strong stylized handwriting or typed fonts, possibly exploiting deliberate errors in OCR technology, as if applying an extra cryptography layer before reversed binarization and eventual post-rules, with aim of concealing messages in bitmapping/pixelized plaintext/images or video.

When used to improve and synthesize under large language models (LLM) their overall feature extractor in back-propagation, its use differs, yet can be combined with previous applications where, for example, garbage collectors for post-processors or sub-sampling can be subjected to reversed binarization, such that computationally "Foreground" pixelbit drawings for any task, inside processing or memory, are transformed into an interior "alphabet" in the machine, for whichever use to be attained with that method, possibly including communication with special hardware modules/digital chips.

Certain processes such as bioimaging or medical image analysis can greatly benefit from this use, if typical "différance" void or interval now-computationally Foreground "characters" or, at large, objects (in the line of D. H. Shepard 's "painted pictures" "signal-no-signal dots", now up to higher-dimensions color artificial neural-processed/memorized imaging "relay contacts" in LLMs) provide invariance and recognition to special feature extractor means still beyond current reach.

This applies not only to referenced instances but to every surveyed OCR application, including: invoice imaging in business, finance, and banking; legal document database classification; healthcare and education (digital repositories and libraries); and any semiotically challenging computer vision (text/image/video) field of recognition, from music scores to 3-D typical (height, width, and depth) rendering of measurements (photogrammetry, laser scanning in topography, and Geospatial Information Systems Integration, etc.) for architecture, smart-cities energy use enhancement, and urban planning, as their many different spectra-imaging object intervals "différances" communicate manifold information under multiple alphabets. It is precisely because the OCR technology of the present invention embodies the empty space between any characters, symbols or signs of any alphabet that the method becomes not only faster, but also more universally competent, as well as distinct and novel. Hence, the present technology's "machine philosophy", borrowing Rabinow 's expression, is an AI-centred semiotics and all-encompassing computer vision software concerning any possible sign of any possible alphabet or form of meaning.

Computer Vision

The disclosed method extends its applicability beyond optical character recognition (in what regards the limited attainment to characters only), to the broader optical sensing imprint of objects in the overlapping and cognate field of computer vision by integrating reversed binarization and différance-derived interval objects within standard image analysis techniques. When applied to edge-detection, contour extraction, and segmentation methods such as Canny, Sobel, Laplacian of Gaussian, k-means clustering, and watershed segmentation, the method enables the reinterpretation of void regions between visual structures as new computational objects. Through subsequent morphological operations like thinning and skeletonization, these interval-derived contours are refined into single-pixel or medial-axis representations, facilitating enhanced topological mapping, structural pattern recognition, and memory-efficient feature extraction across diverse computer vision tasks such as shape analysis, object detection, and spatiotemporal visual understanding by way of the computing use of reversed binarization of the said object intervals.

Supplementary technical notes

This section provides supplementary notes offering additional insights where the invention intersects with OCR legacy and state-of-the-art and moreover where it intersects with legacy OCR formulization related to algorithms and/or methods for processing and recognizing text. Such formulizations remain patentable when part of a larger inventive, new, useful, and non-obvious process in OCR patent history, such as algorithms or techniques utilizing formulization fundamental for novel OCR systems - a domain laden with sufficiently difficult technical, juridical, and philosophical considerations.

The method of the present invention herein presented does not claim any aforementioned legacy and state-of-the-art OCR formulizations, yet it affects the application scope of the same OCR formulizations, furthermore, potentially enacting different claimable methods arising from the underpinning primitive root of "reversed binarization" with new "différance" characters and its intended scope of use.

## Binary convention and implementation

Acknowledging that assignment of ("Foreground") (text/images/video) and ("Background") values as, respectively, 0 and 1 is not universally fixed and can vary depending on implementation - wherein common convention designates ("Foreground") (text/characters) as 0 ("Black") and ("Background") as 1 ("White"), and that in general OCR Stage 2 (pre-processing) grey levels are classified on intensity levels (0-255) with 0 representing pure ("Black") and 255 pure ("White") - the present invention employs "reversed binarization" on whichever previous binary setup and, determinatively, counts with the binary repository of grey histogram analysis, not merely after threshold calculus and eventual final image classification.

Because binary bitmapping/pixelization content in legacy and state-of-the-art OCR technology after thresholding in Stage 2 (Pre-Processing) constitutes, at this technological timeline point, divisive and predominantly only an averagely small percentage of ("Foreground") "Black" text subjected to ensuing OCR stages, and moreover never capitalizing any other application to any known or new technology, while exactly the inverse occurs with the present invention, it must be asserted comprehensively that if those formulizations are used past OCR "reversed binarization," with this accessing a substantially vaster array of applications and granting greater optimization, then they definitively include a broader spectrum of application and innovative methods through use of "reversed binarization" with new "différance" characters/objects guiding technique when so used.

Because the technology itself constitutes OCR, meaning Optical Recognition of Characters being optimized and elevated, with a vaster array of applications enabled by the method of the present invention, it certainly means that the primitive root of "reversed binarization" with new "différance" characters/objects must also be contemplated as the primitive root of newer, innovative, and results-granting next-level OCR technology, apt for advanced AI, machine learning, deep learning, neural networks, cellular automata, and cryptographic methods.

## Exemplary formulizations

Clear examples are provided hereinafter (exemplarily in relation to "binarization" itself by way of Otsu's method and optimal threshold equation; and to "thinning," by way of Zhang-Suen's iteration):

## Binarization formulization under Otsu's method

The Otsu algorithm is commonly known as the maximized difference between classes method. The optimal threshold for the desired image constitutes the value maximizing the gap between categories, expressible as follows:

$$T' = \arg \max_{0 \le T \le L} \omega_0(T)\omega_1(T)(\mu_0(T) - \mu_1(T))^2$$

where the image pixel is represented in the grey level of the image having L-order grey level, $\omega_0(T)$ and $\omega_1(T)$ are the probability distribution of target and background when threshold value is T, $\mu_0(T)$ and $\mu_1(T)$ represent the average grey value of the pixel of target and background, respectively. If the pixel value of the input image exceeds T', the pixel is set to white; otherwise, it is black. (Zhengxian Yang, et al.; A Review of Document Binarization: Main Techniques, New Challenges, and Trends, 2024).

## Thinning formulization under Zhang-Suen's iteration

The thinning operation relates to the hit-and-miss transform and can be expressed simply in its terms. The thinning of an image I by a structuring element J is:

$$\text{thin(I,J)} = I - \text{hit-and-miss (I,J)}$$

where subtraction is logical subtraction defined by $-Y = X \cap NOT Y$.

In practical terms, the thinning operation is calculated by translating the origin of the structuring element to each possible pixel position in the image, and at each such position comparing it with underlying image pixels. If foreground and background pixels in the structuring element exactly match foreground and background pixels in the image, then the image pixel underneath the origin of the structuring element is set to background (zero). Otherwise, it remains unchanged. Note that the structuring element must always have a one or blank at its origin to have any effect. (https://homepages.inf.ed.ac.uk/rbf/HIPR2/thin.htm; see also T.Y. Zhang and C.Y. Suen, A Fast Parallel Algorithm for Thinning Digital Patterns; Communications of the ACM; 1984).

## Application to Otsu's method

Regarding Otsu's method, the optimal threshold value designated as T dissects Foreground/Background segments under bimodal distribution as intra-class variant maximizing/minimizing the gap between categories. The probability of the two classes separated by threshold T along with proper variances of the two classes compose the proper threshold. After histogram of pixel grey intensities for every number of pixels, each number of pixels is divided into two classes above or below the threshold, with probability of each class calculated as balance between pixel intensity and intensity values, resulting in intra-class variances as weighted sum of variances within each class after mean intensity for each class, thereafter finding maximized and/or minimized intra-class variance (both representing optimal threshold selection).

For every one of these steps in action under Stage 2 (Pre-Processing) OCR (including grey or RGB color intensities binary information histograms), the method of "reversed binarization" of the present invention can be optimized either through simple alteration or effectively considering the ("différance") characters/objects as themselves optimal new intra-variance thresholds between original (open or closed curves) characters for any "document item" segmentation.

## Application to Zhang-Suen's thinning method

Regarding Zhang-Suen's "thinning" iterative method, it employs fast parallel processing consisting of two sub-iterations: one aimed at deleting SE (South-East) border or boundary points and NW (North-West) corner points, the second aimed at deleting NW (North-West) border or boundary points and SE (South-East) corner points, described as skeletal pixel peeling while preserving connectivity.

Under conditions similar to cellular automata iterative conditions, rules, and steps, counter points and subsequently width lines are deleted first by number of nonzero ("Black") upto-8 neighbors marking, number of patterns or transitions with connectivity structure preservation by not allowing more than one transition, and safeguarding sub-iteration rules whereby at least one of grouped pixels are ("White") and marked for deletion. For every one of these steps in action under Stage 2 (Pre-Processing) OCR (including grey or RGB color intensities binary information histograms), the method of "reversed binarization" of the present invention with new "différance" characters can be optimized either through simple alteration or effectively considering the ("différance") characters as themselves optimal new identified "thinning/skeletonization" objects between original (open or closed curves) characters for any "document item" segmentation.

## Computational efficiency considerations

Independent of this, it should be noted that, even though the text-in-line "document item" sentence or more broadly any quoted items (word, line, sentence, paragraph, region, and other text-based structures, or text-in-line segmentations) that compose the ("différance") new characters/objects between original ("Foreground") characters can involve more (vector or raster) bitmap/pixelization in the scene (e.g., the "Black" pixels of the interval character between "A" and "B" that might ascend and/or descend in "différance" not merely above and below, but in all directions and transformations from the same corpus of the characters' interval baseline, instead of bidirectionally only at their left-to-right or right-to-left interval), this occurs only if the text-in-line is very large.

Given that with each new ("différance") interval character at least two (and within average probability near four counting with the previous and the following intervals), rather than merely one, graphical original characters are recognized, aside from the fact that further thinning/skeletonization can be performed with substantial decrease in pixel numbers (if not for all other reasons, by area of scene alone), the claims are consubstantiated together under the primitive root accordingly.

## Conclusion

The foregoing detailed description provides sufficient information for those skilled in the art to understand the functionality, scope, and applicability of the present invention. The disclosed embodiments of the present invention are illustrative and not restrictive. While specific configurations of the present invention have been described, it is understood that the present invention can be applied to a wide variety of OCR technologies and their inner stages subsequent to Stage 1 (Image Acquisition). Numerous alternative ways of implementing the invention exist, and by leveraging the potential of pre-processing techniques through the primitive root of reversed binarization with new "différance" characters/objects, a substantial range of new applications becomes available for higherintelligent OCR and computer vision artificial-centered tasks, methods, and techniques. Without restating the detailed claims, the invention's main utility can be reinforced as follows: the present invention's technology, apart from permitting compression of memory and processing requirements for character and objects recognition - which alone can produce improvements across multiform legacy tasks including strong AI algorithmizing, deep learning, contextual understanding, and real-time OCR and computer vision - also prepares for the integration of advanced AI, cryptographic methods, cellular automata, and neural network models (including large language models) paired with OCR technology and computer vision.

## Definitions

**OCR** - Optical Character Recognition, a technology used to convert different types of documents - such as scanned documents, or camera-captured images - into editable & searchable data. OCR analyses different matching patterns of light and dark in an image to the end of recognizing characters (letters, numbers) and, possibly, any object symbol from every digitalized support (printed texts, enabling text recognition from books, invoices, checks, etc) making them machine-readable for editing, searching, and/or data processing.

**Computer Vision** - field of computational imaging and pattern recognition that enables machines to acquire, process, and interpret visual information from the physical world through sequential algorithmic stages analogous to those of optical character recognition (OCR): image acquisition, pre-processing, segmentation, feature extraction, classification, and post-processing, operating on text, images, or video alike. By converting optical or digital inputs into structured, machine-readable data, performing object detection, contour analysis, motion tracking, and semantic understanding, it overlaps and extends OCR's principles of optical sensing from character recognition to the general recognition of objects, shapes, structures, and spatial relations among visual objects.

**B & W** - Black and White (pure pixels with binary code assignment).

**Binarization** - the process of converting a grayscale or color image into a binary only image, where each pixel is either black or white, by applying a threshold value: in typical OCR and image processing contexts, 1 often represents "White" ("Background"), and 0 represents "Black" ("Foreground").

**Thinning** - a morphological image processing technique used to reduce the thickness of objects in a binary image, typically to a single-pixel-wide overall structure preserving the shape of the object, helping nevertheless to differentiate objects as shapes from the shape of letters.

**Skeletonization** - a technique in image processing that reduces a binary image object to its essential "skeleton", axial or central structure, which, most often than not, can be extended to resulting in a one-pixel-wide representation. Contrary to "thinning", which progressively reduces an object's thickness while maintaining its size, "skeletonization" preserves instead the overall connectivity and topology of the object, while minimizing its shape and also size if needed to a core framework, with the goal of overall increasing pattern recognition in complex character shapes, by way of focusing on key inner structural elements and their geometry.

**"Différance"** - new characters/objects derived from intervals of original optically recognized characters/objects under every "document item" (word, line, sentence, paragraph, region, and other text-based structures) or any chosen segmentation, including relation to any-dimensional space transformations in between objects.

**Text-in-line** - In OCR technology, *text-in-line* refers to the fundamental step of segmenting a block of text into each single horizontal sequence of text elements (words or characters) detected and processed together as one continuous line of text within a document image.

**Diagonalization** - The act of presenting a new, functionally equivalent formulation of a concept (like a key or a proof, but also the simplest use of inversed binarization) that is not recognizable as equivalent to the original, thereby in appearance at least breaking the link between the two.

**Claims**

1. A computer-implemented optical character recognition and computer vision method for application in images and video including text, consisting of computing the void interval in between any original Foreground recognizable objects as new objects comprising the stages

   - image acquisition, where the method receives an image or video containing information as input;
   - pre-processing, where the method performs the enhancement of image quality for analysis by different techniques, including but not limited to noise reduction, contrast adjustment and color correction;
   - image segmentation, where the method segments and extracts features, isolating distinctive patterns, detecting edges, corners, textures, and key points;
   - object extraction, where the identifying features of objects included in the segments are recognized, including general patterns, shapes, and strokes where it locates and identifies different objects, such as drawing bounding boxes around recognized items;
   - image classification process, in which the recognition by object or item is performed through algorithmic and/or machine learning identification, such as categorizing the entire image or objects into classes, and further labelling with confident scores; and
   - post-processing, where error correction, final validation of recognized objects and items and reconstruction of its structures are applied, including operations such as thresholding, result filtering, and context integration;

   **characterized in that** the method further comprises the conduction of computing the void interval between any original Foreground recognizable or devised objects, through color or Black and White high contrast reversed binarization on the first binary image to generate a reversed binary use of the image.

2. A computer-implemented optical character recognition and computer vision method according to the previous claim, **characterized in that** the image segmentation stage or further stages comprises applying a reversed binarization procedure that identifies void intervals between original visual objects, contours, or textures and interprets said void intervals as new structural objects, resulting in a structured sequence of intervalbased features suitable for further analysis or classification.

**3.** A computer-implemented optical character recognition and computer vision method according to any of the previous claims, **characterized in that** the pre-processing stage further includes an edge-detection or contour-detection sub-procedure applied to the reversed binarized image or video frame sequence.

**4.** A computer-implemented optical character recognition and computer vision method according to the previous claim, **characterized in that** the edge-detection sub-procedure includes performing a morphological operation selected from contour thinning, topological skeletonization, or medial-axis transform upon the reversed binary image, thereby reducing the thickness of interval-derived contours or object boundaries to single-pixel-wide structural lines for enhanced feature mapping and spatial topology extraction.

**5.** A computer-implemented optical character recognition and computer vision method according to any of the previous claims, **characterized in that** the binarization process employs a thresholding or segmentation method selected from the group consisting, but not limited to, Canny edge-based thresholding, Sobel gradient thresholding, Laplacian of Gaussian (LoG) filtering, adaptive mean/gaussian thresholding, region-growing segmentation, k-means clustering, or watershed segmentation, to optimize the separation of foreground and background regions before the reversed binarization process.

**6.** A computer-implemented optical character recognition and computer vision method according to any of the previous claims, **characterized in that** the machine learning identification stage utilizes neural network models selected from the group consisting of, but not limited to, convolutional neural networks (CNNs), vision transformers (ViTs), graph neural networks (GNNs), and spatio-temporal deep learning architectures trained on interval-derived contour or structural patterns produced by the reversed binarization pipeline.

**7.** A computer-implemented optical character recognition and computer vision method according to any of the previous claims, further comprising encrypting data using the interval objects or characters as cryptographic elements by at least one of the following methods:

    a. concealing messages in plain image and video, including text by encoding information in patterns of said intervals between objects or characters, whereby encrypted data is embedded in spatial relationships between rather than in object or character content, thereby achieving steganographic concealment;

    b. employing asymmetric cryptography using public keys represented by patterns of said interval objects or characters, whereby cryptographic keys are distributed in visually inconspicuous spacing patterns, thereby reducing detectability of key exchange; and
    c. applying diagonalization to said intervals objects or characters to generate functionally equivalent but non-recognizable representations, whereby cryptographic functions are obfuscated from pattern analysis while maintaining computational equivalence.

**8.** A computer-program product comprising computer-executable instructions which, when executed by a processor, cause the processor to perform the method according to any one of the previous claims.

1  2  3  4  5  6

2.1  3.1  4.1  5.1  6.1

Figure 1

AB

Figure 2

Europäisches
Patentamt

European
Patent Office

Office européen
des brevets

# EUROPEAN SEARCH REPORT

**Application Number**

**EP 25 21 4682**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRISNAWATI LUCIA D KRISNA@STAFF UKDW AC ID ET AL: "Building Classifier Models for on-off Javanese Character Recognition", PROCEEDINGS OF THE 31ST AUSTRALIAN CONFERENCE ON HUMAN-COMPUTER-INTERACTION, ACMPUB27, NEW YORK, NY, USA, 2 December 2019 (2019-12-02), pages 25-34, XP058875501, DOI: 10.1145/3366030.3366050 ISBN: 978-1-4503-8899-3 * Section 5; figure 4 * | 1-8 | INV. G06V30/10 |

-----

TECHNICAL FIELDS
SEARCHED (IPC)

G06V

The present search report has been drawn up for all claims

| Place of search | Date of completion of the search | Examiner |
|---|---|---|
| The Hague | 4 February 2026 | Grigorescu, Simona |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

**Patent documents cited in the description**

- DE 507041, Gustav Tauschek
- US 2663758 A, David Hammond Shepard
- US 2933246 A, Jacob Rabinow
- US 6199042 B, Kurzweil

**Non-patent literature cited in the description**

- **K. N. OTSU**. Document Image Binarization: A Comprehensive Survey. *IEEE Transactions on Pattern Analysis and Machine Intelligence*, 1979
- **YANN LECUN et al.** Handwritten Digit Recognition with a Back-Propagation Network. *Advances in Neural Information Processing Systems*, 1989
- **YOSHUA BENGIO**. Convolutional Networks for Images, Speech, and Time Series. MIT Press, 1995
- **ALEX GRAVES** ; **JÜRGEN SCHMIDHUBER**. Bidirectional Long Short-Term Memory Networks for Machine Reading. *Advances in Neural Information Processing Systems*, 2005
- **RAY SMITH**. Tesseract: An Open-Source Optical Character Recognition Engine. *Google Research*, 2007
- **GUSTAV TAUSCHEK**. *Reading Machine*, 1930
- **D. H. SHEPARD**. *Apparatus for Reading*, 1950
- **ZHENGXIAN YANG et al.** *A Review of Document Binarization: Main Techniques, New Challenges, and Trends*, 2024
- **T.Y. ZHANG** ; **C.Y. SUEN**. A Fast Parallel Algorithm for Thinning Digital Patterns. *Communications of the ACM*, 1984